# EUROPÄISCHE PATENTSCHRIFT

(11) **EP 1 636 528 B1**
(45) Veröffentlichungstag und Bekanntmachung des Hinweises auf die Patenterteilung: **11.10.2017**
(21) Anmeldenummer: 04739498.6
(22) Anmeldetag: 01.06.2004
(51) Int. Cl.: F25B 39/02, F25B 35/00

(54) **BEHÄLTER MIT WÄRMETAUSCHER FÜR KOMPAKTE SORPTIONSKÄLTEANLAGEN UND -WÄRMEPUMPEN SOWIE SORPTIONSKÄLTEANLAGE UND -WÄRMEPUMPE MIT EINEM SOLCHEN BEHÄLTER**
CONTAINER WITH HEAT EXCHANGER FOR COMPACT SORPTION REFRIGERATION INSTALLATIONS AND COMPACT HEAT PUMPS AND SORPTION REFRIGERATION INSTALLATION AND SORPTION HEAT PUMP WITH SAID CONTAINER
RECIPIENT AVEC ECHANGEUR THERMIQUE POUR INSTALLATIONS FRIGORIFIQUES A SORPTION ET POMPES A CHALEUR A SORPTION COMPACTES, ET INSTALLATION FRIGORIFIQUE A SORPTION ET POMPE A CHALEUR A SORPTION COMPRENANT LEDIT RECIPIENT

(30) Priorität: 30.05.2003 DE 20308601 U
(43) Veröffentlichungstag der Anmeldung: 22.03.2006
(73) Patentinhaber: ZAE Bayern Bayerisches Zentrum für angewandte Energieforschung e.V., 85748 Garching (DE)
(72) Erfinder: SCHWEIGLER, Christian, 82178 Puchheim (DE); KREN, Christoph, 85735 Neufahrn (DE); HARM, Mario, 80369 München (DE)
(74) Vertreter: Winter, Brandl, Fürniss, Hübner, Röss, Kaiser, Polte - Partnerschaft mbB
(86) Internationale Anmeldenummer: PCT/EP2004/005909
(87) Internationale Veröffentlichungsnummer: WO 2004/113802

(56) Entgegenhaltungen:
- EP-A- 1 122 505
- DE-A- 19 860 151
- DE-A1- 4 141 556
- FR-A- 2 591 504
- GB-A- 772 065
- JP-A- H04 122 961
- US-A- 1 331 356
- US-A- 2 014 096
- US-A- 2 301 232
- US-A- 2 877 000
- PATENT ABSTRACTS OF JAPAN Bd. 1995, Nr. 11, 26. Dezember 1995 (1995-12-26) -& JP 07 208830 A (HITACHI LTD), 11. August 1995 (1995-08-11)
- PATENT ABSTRACTS OF JAPAN Bd. 1996, Nr. 04, 30. April 1996 (1996-04-30) -& JP 07 332802 A (DAIKIN IND LTD), 22. Dezember 1995 (1995-12-22)
- PATENT ABSTRACTS OF JAPAN Bd. 1996, Nr. 05, 31. Mai 1996 (1996-05-31) -& JP 08 005192 A (DAIKIN IND LTD), 12. Januar 1996 (1996-01-12)
- PATENT ABSTRACTS OF JAPAN Bd. 1998, Nr. 08, 30. Juni 1998 (1998-06-30) -& JP 10 082594 A (HITACHI LTD), 31. März 1998 (1998-03-31)
- PATENT ABSTRACTS OF JAPAN Bd. 1999, Nr. 02, 26. Februar 1999 (1999-02-26) -& JP 10 300260 A (HITACHI LTD), 13. November 1998 (1998-11-13)
- PATENT ABSTRACTS OF JAPAN Bd. 2000, Nr. 01, 31. Januar 2000 (2000-01-31) -& JP 11 294973 A (TOKYO GAS CO LTD), 29. Oktober 1999 (1999-10-29)
- PATENT ABSTRACTS OF JAPAN Bd. 2000, Nr. 20, 10. Juli 2001 (2001-07-10) -& JP 2001 082824 A (SANYO ELECTRIC CO LTD; TOKYO GAS CO LTD; OSAKA GAS CO LTD; TOHO GAS CO), 30. März 2001 (2001-03-30)

## Beschreibung

Die Erfindung betrifft einen Behälter mit Wärmetauscher für kompakte Sorptionskälteanlagen oder -wärmepumpen nach dem Oberbegriff des Anspruch 1 sowie eine Sorptionskälteanlage oder - wärmepumpe mit einem solches Behälter nach Anspruch 10.

Dem Stand der Technik entsprechend beinhalten Absorptionskälteanlagen und Absorptionwärmepumpen als Hauptkomponenten Rohrbündelwärmetauscher in horizontaler Bauart. Diese Hauptkomponenten werden als Verdampfer, Absorber, Kondensator oder Austreiber betrieben. Im folgenden ist mit dem Begriff "Kälteanlage" immer der Einsatz eines Sorptionskreislaufs als Kälteanlage oder Wärmepumpe gemeint.

Diese horizontalen Rohrbündel werden typischerweise in Behältern installiert und auf der Rohraussenseite mit Kältemittel oder Sorptionsmittel (flüssig oder fest) beaufschlagt. Auf den Rohrinnenseiten strömt der jeweilige Wärmeträger, beispielsweise Wasser, evtl. in Mischungen, Dampf oder heißes Gas. Die abgeschlossenen Behälter dienen der Aufrechterhaltung des für die Funktion des Kälteanlagenprozesses erforderlichen Betriebsdruckes und halten störende Stoffe fern. Normalerweise befinden sich jeweils zwei Hauptkomponentenwärmetauscher gemeinsam in einem Behälter.

Die Abdichtung der Durchführung der Wärmetauscherrohre durch die Behälterwand erfolgt normalerweise durch Einwalzen, Löten oder Schweißen. Dies ist mit einem hohen Aufwand hinsichtlich Verarbeitung und Materialaufwand verbunden und birgt zudem Risiken im Hinblick auf die Betriebssicherheit und die Anlagenfunktion: Beim Betrieb im Überdruck können im Falle von Undichtigkeiten gefährliche Stoffe austreten. Beim Betrieb im Unterdruck können eindringende Stoffe die Funktion der Anlage beeinträchtigen. Dies gilt insbesondere für den Einfluß nichtkondensierbarer Gase auf die Funktion von Absorptionskälteanlagen mit dem flüssigen Arbeitsstoffpaar Wasser/wässrige Lithiumbromidlösung.

Die JP 2001 201 211 A zeigt einen Absorber für eine Kältemaschine, bei der ein Adsorptionsblock auf seiner Einlassseite am Heizmediumeinlass in eine erste Abschlussplatte eingebaut und damit verbunden ist und entsprechend am gegenüberliegenden Auslass in eine zweite Platte eingebaut ist. Parallel dazu wird analog ein Verdampfungs-/Kondensationsblock mit den beiden Platten verbunden und dann wird ein Gehäuse durch diese Platten beidseitig geschlossen, so dass die Kältemaschinenkomponenten luftdicht im Gehäuse liegen.

Aus der DE 41 41 556 A1 ist ein Wärmetauscher für eine Abgasanlage eines Kraftfahrzeugs bekannt, bei dem in einem Behälter eine Mehrzahl von Wärmetauscherschlangen angeordnet ist. Die Wärmetauscherschlangen werden außerhalb des Behälters in einem gemeinsamen Einlass und einem gemeinsamen Auslass zusammengeführt.

Aus der US 2 877 000 A ist ein Wärmetauscher für Kälteanlagen bekannt, bei dem in einem Behälter eine Mehrzahl von Wärmetauscherplatten mit Strömungskanälen in den Platten und zwischen den Platten angeordnet ist. Die Strömungskanäle in den Wärmetauscherplatten werden an den beiden Stirnseiten in einer Einlass- und einer Auslasskammer zusammengeführt. Durch Leit- und Trennbleche und die beabstandeten Wärmetauscherplatten werden die Strömungskanäle zwischen den Wärmetauscherplatten definiert. Durch die Leit- und Trennbleche werden die Wärmetauscherplatten im Abstand zu der Behälterwandung gehalten.

Die US 1,331,356 A offenbart einen Behälter nach dem Oberbegriff des Anspruchs 1.

Ziel dieser Erfindung ist es, die Wärmetauscher so auszuführen, dass sowohl Herstellprozess und Herstellkosten günstig beeinflusst werden als auch die Funktion der Wärmetauscher verbessert oder Störungen des Kälteanlagenprozesses vermieden werden.

Dieses Ziel wird durch einen Behälter gemäß den Merkmalen des Anspruchs 1 bzw. durch eine Sorptionswärmepumpe bzw. Sorptionskältemaschine nach Anspruch 10 erreicht.

Gemäß der Erfindung wird der bzw. die Wärmetauscher derart in einem Behältern untergebracht, dass die Anzahl der erforderlichen Durchführungen durch die Wände des Behälters minmiert werden und gleichzeitig weiterhin eine kompakte Bauform der Kälteanlage möglich ist. Zudem erlaubt die erfindungsgemäße Ausführung der Wärmetauscher weitgehend die Beibehaltung der Anlagenkonzepte, Dimensionierungen und Konstruktionsdetails, die bisher bei den oben beschriebenen Anlagen mit horizontalen Rohrbündeln Verwendung finden. Die verwendeten Wärmetauschergeometrien müssen einen Betrieb mit geringen prozessinternen Druckverlusten, d.h. in der Dampfströmung vom Austreiber zum Kondensator sowie vom Verdampfer zum Absorber, zulassen.

Gemäß der Erfindung stützt sich die Behälterwandung auf dem wenigstens einen Wärmetauscher insbesondere punktuell ab.

Die Unteransprüche beziehen sich auf vorteilhafte Ausgestaltungen der Erfindung. Weitere Einzelheiten, Merkmale und Vorteile ergeben sich aus der nachfolgenden Beschreibung bevorzugter Ausführungsformen.

Es zeigt
Fig. 1 bis 6 eine erste Ausführungsform des Behälters mit einem Wärmetauscher in Form mäandrierender Rohrschlangen,
Fig. 7 bis 8 eine zweite Ausführungsform der Erfindung, die sich von der ersten Ausführungsform durch Lamellen zur Verbesserung des Wärmeübergangs unterscheidet,
Fig. 9 bis 11 eine dritte Ausführungsform der Erfindung mit einem Wärmetauscher in Form von Wärmetauscherplattenpaaren,
Fig. 12 eine vierte Ausführungsform der Erfindung, die sich von der dritten Ausführungsform durch durchgehende Öffnungen in den Wärmetauscherplatten unterscheidet,
Fig. 13 eine Skizze zur Erläuterung der Funktionsweise der dritten und vierten Ausführungsform,
Fig. 14 eine erste Ausführungsform einer Sorptionswärmepumpe oder -kältemaschine gemäß der vorliegenden Erfindung,
Fig. 15 eine zweite Ausführungsform einer Sorptionswärmepumpe oder -kältemaschine gemäß der vorliegenden Erfindung, und
Fig. 16 einer fünften Ausführungsform des Behälters gemäß der vorliegenden Erfindung, wie sie insbesondere bei der Sorptionswärmepumpe bzw. -kältemaschine gemäß den Figuren 14 und 15 eingesetzt wird.

Im folgenden werden einige Bauformen gemäß der vorliegenden Erfindung aufgeführt:

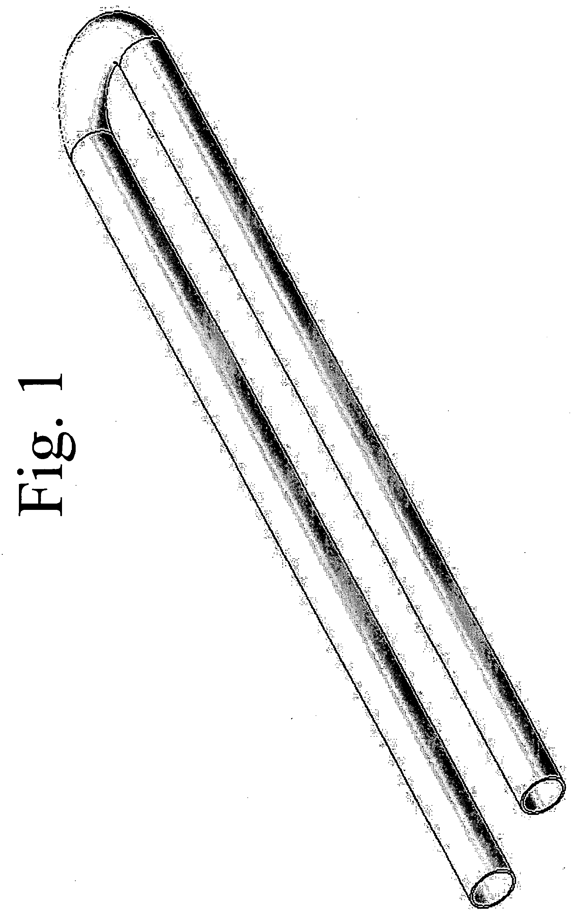

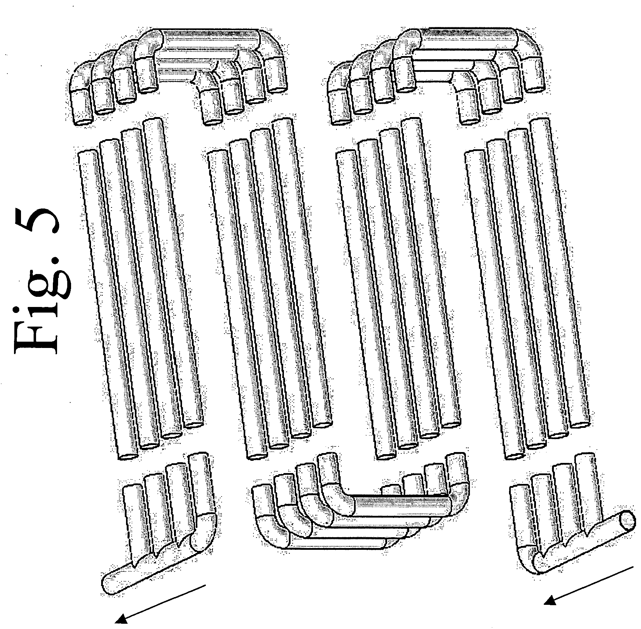

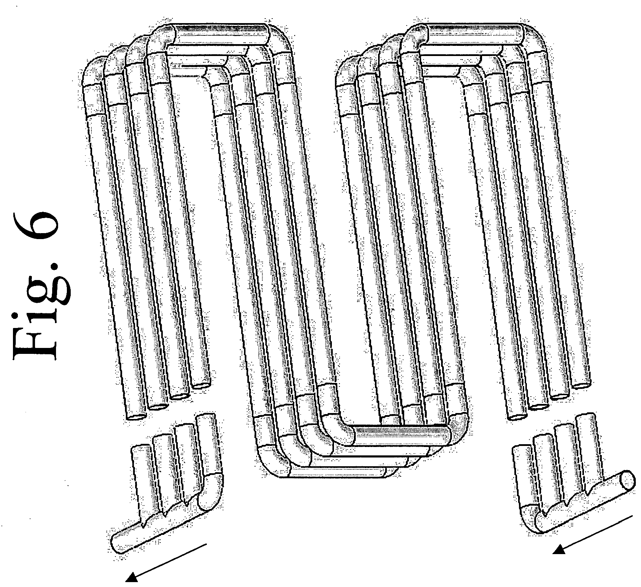

Horizontale Rohrpakete, wie sie beispielweise bei Luftkühlern Verwendung finden, jedoch ohne Lamellen zur Verbesserung des Wärmeübergangs auf der Rohraussenseite (Fig. 1 bis 6).

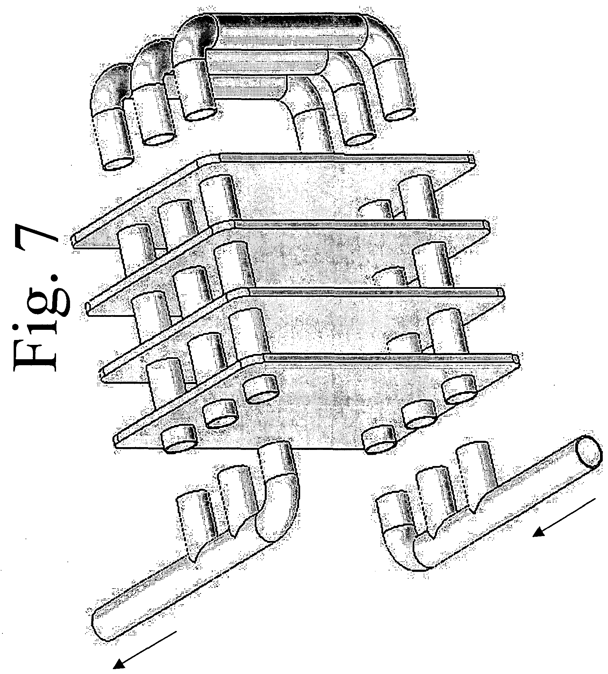

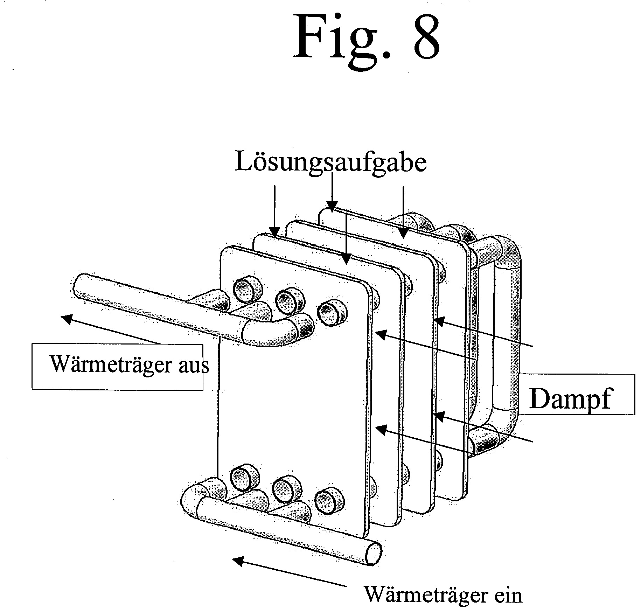

Horizontale Rohrpakete, wie sie beispielweise bei Luftkühlern Verwendung finden, mit Lamellen zur Verbesserung des Wärmeübergangs auf der Rohraussenseite (Fig. 7 und 8). Diese Vergrößerung der äußeren Wärmetauscher kann insbesondere bei der Absorption und Desorption vorteilhaft sein.

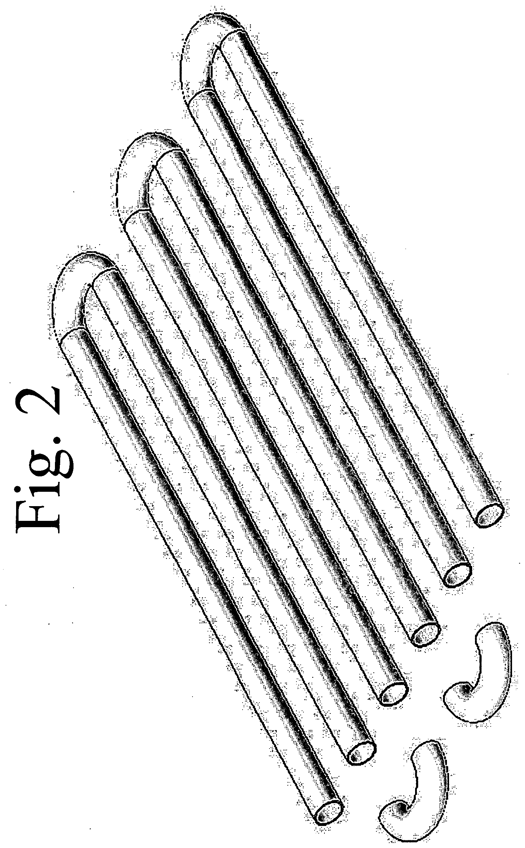

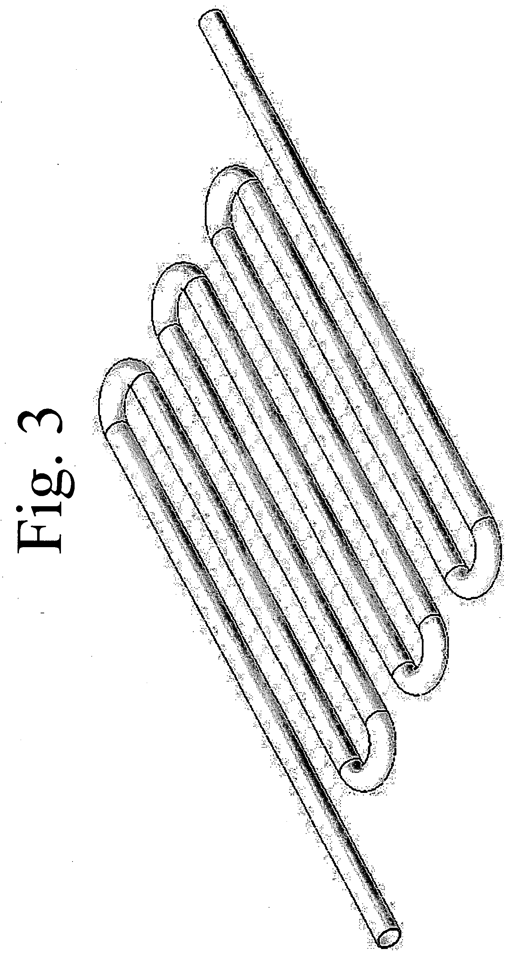

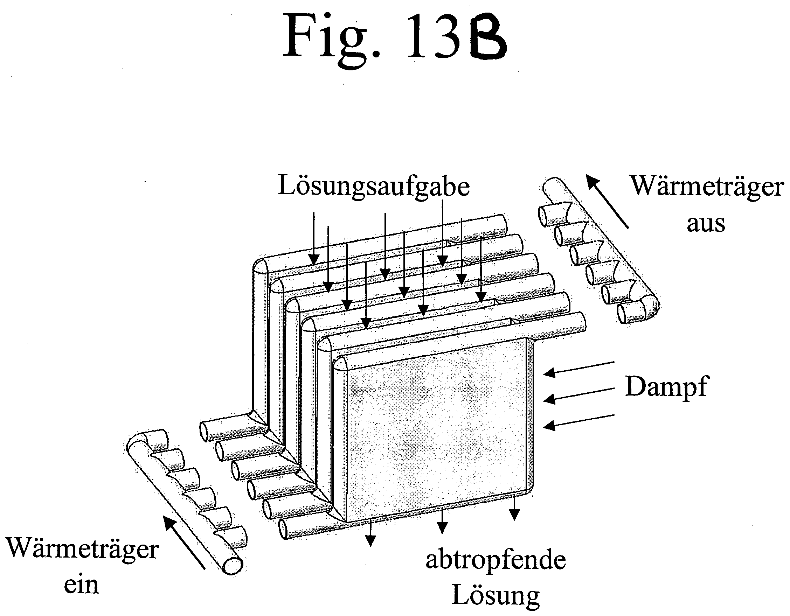

Die vorgenannten Rohrpakete ähneln den typischerweise verwendeten Rohrbündeln mit in die Rohrplatten (stirnseitige Behälterwände) von Sorptionskälteanlagen eingewalzten horizontalen Rohren, jedoch wird auf die Durchführung jedes einzelnen Rohres (oder Haarnadelrohres) durch die Behälterwand verzichtet. Stattdessen wird ein meandrierender Rohrzug hergestellt, der den Behälter ausfüllt. Vorteilhafterweise füllt das Rohrpaket einen Quader, so dass es verfahrenstechnisch weiterhin wie ein Rohrbündel aufgefasst und behandelt werden kann. Für die Ausführung dieses meandrierenden Rohrzuges können Haarnadelrohre und U-Bögen - siehe Fig. 1 und 2 - und/oder meanderförmig gebogene Rohre - siehe Fig. 3 - verwendet werden. Die Herstellung ähnelt damit zumindest teilweise der Herstellung von Standardwärmetauschern aus der Kälte- und Klimatechnik, wie z.B. von Luftkühlern oder Verflüssigern.

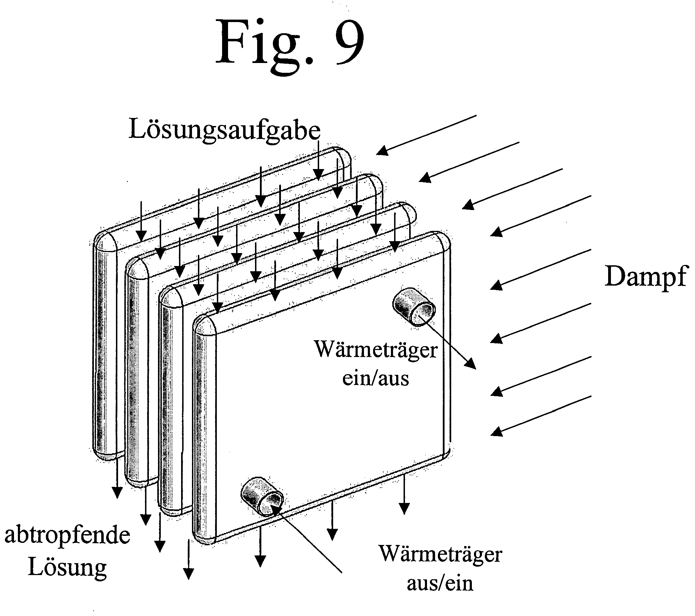

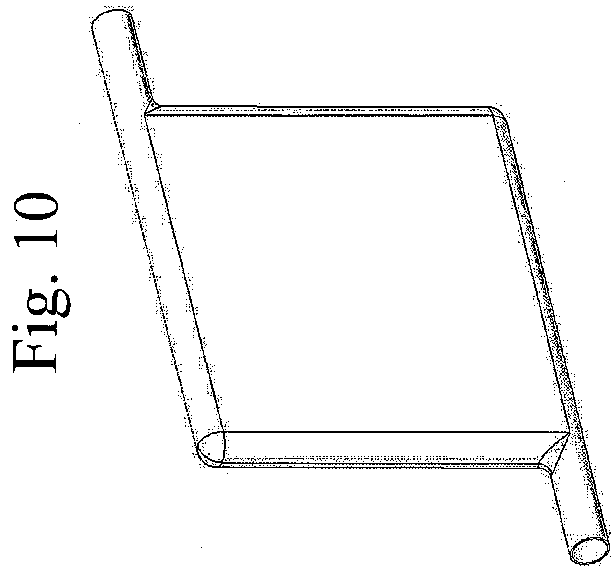

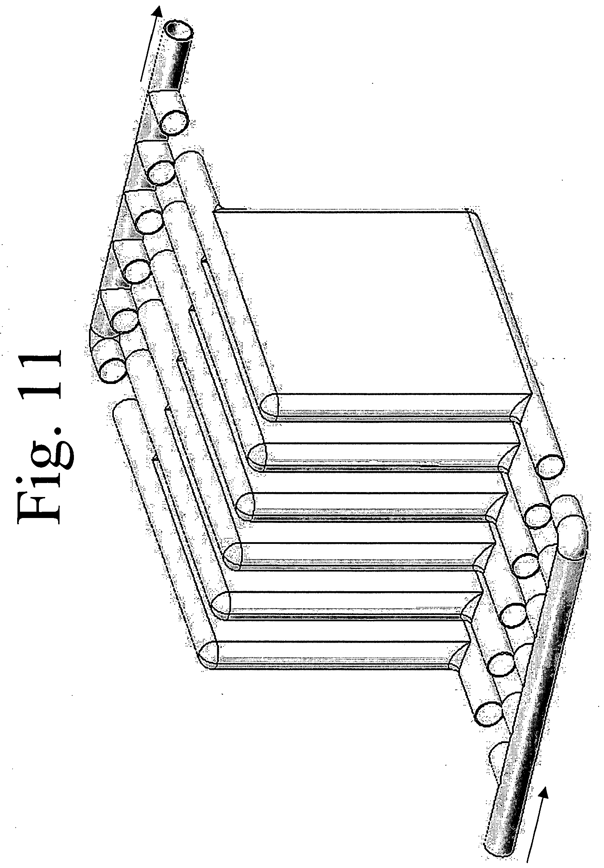

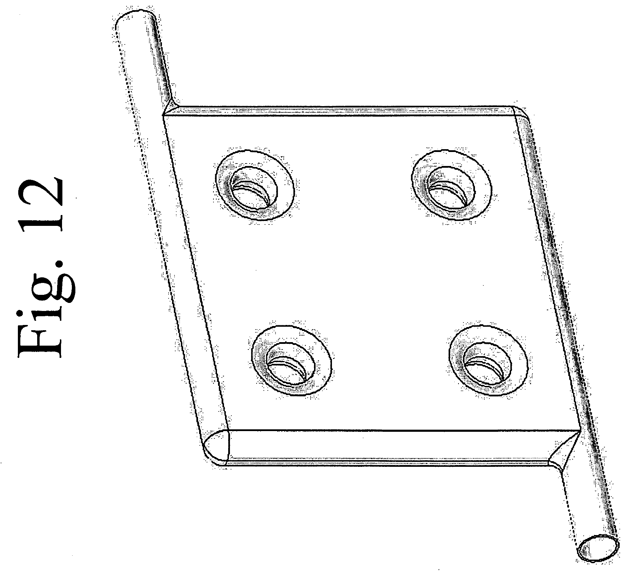

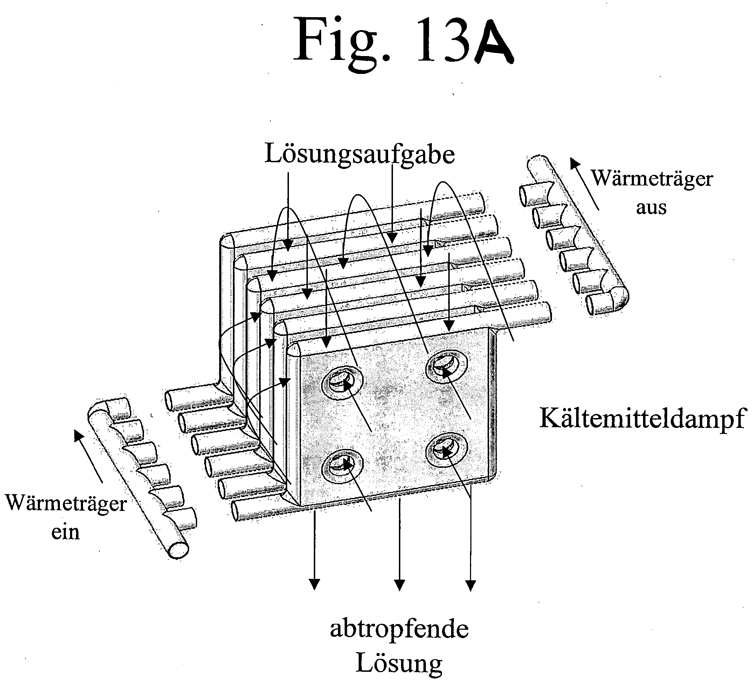

Alternativ zu Rohren als Ausgangsmaterial für die Wärmetauscherherstellung können auch Wärmetauscherplatten eingesetzt werden - siehe Figuren 9 bis 13 -, ähnlich zu herkömmlichen Plattenwärmetauschern, jedoch derart modifiziert, dass ein Einsatz als Fallfilmapparat oder überfluteter Wärmetauscher möglich ist. In jedem Fall sind entsprechend große Dampfkanäle zwischen den Platten und bei der Positionierung im Behälter zur Vermeidung störender Druckverluste vorzusehen - siehe fig. 12 und 13.

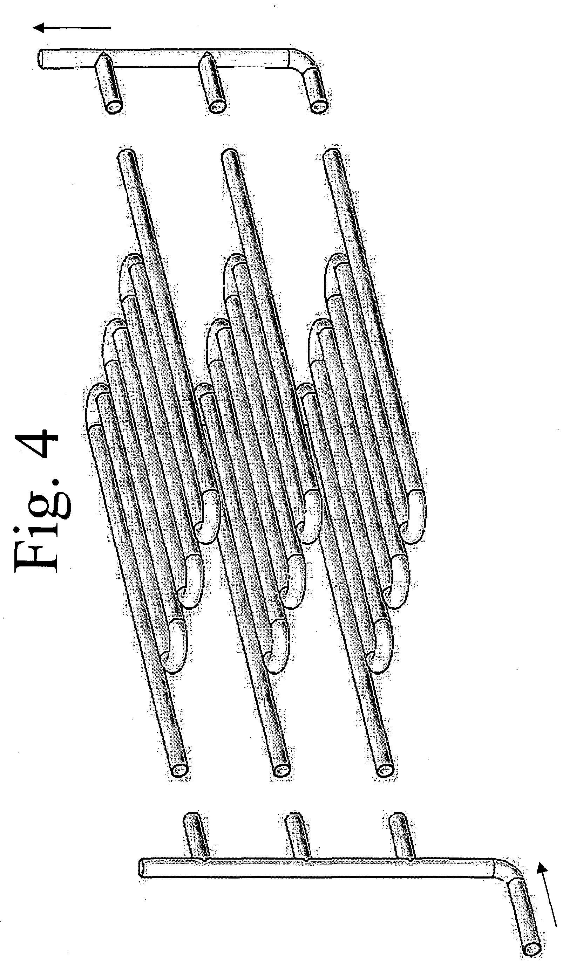

Der Rohrzug bzw. die Wärmetauschergeometrie kann so ausgeführt werden dass - wie bei den herkömmlich verwendeten Rohrbündeln - eine serielle, parallele oder eine teilweise parallele Durchströmung der Abschnitte des Wärmetauschers erfolgt - siehe Fig. 4, 5 und 6.

Der jeweilige Wärmetauscher wird einzeln oder paarweise in einem Behälter montiert. Der Wärmeträger wird nur über eine Vor- und eine Rücklaufleitung oder über wenige Vor-Rücklaufleitungspaare oder mittels eines Sammler- oder Verteilerrohres und einzelnen Vor- oder Rücklaufrohren an den externen Wärmeträger (Kaltwasser, Kühlwasser, Antriebswärme, oder sinngemäß andere) angeschlossen. Es sind auch beliebige Kombinationen zwischen den vorgenannten Anschlussarten möglich. Beispiele zeigen die Figuren 4 bis 6.

Prinzipiell kommen beliebige andere Wärmetauschergeometrien für eine Verwendung entsprechend dieser Erfindung in Frage, die es erlauben die Anzahl der Durchführungen der den Wärmeträger führenden Leitungen durch die Behälterwände zu reduzieren.

Erfindungsgemäß gestaltete Wärmetauscher können in beliebigen ein- und mehrstufigen geschlossenen Sorptionskälteanlagen mit flüssigen oder festen Sorbentien eingesetzt werden. Sie sind insbesondere geeignet für kompakte Anlagen mit Verdampferleistungen im Bereich bis wenige 100kW. Entsprechende Kälteanlagen können beispielsweise mit Solarwärme oder Niedertemperaturwärme, beispielsweise aus Kraft-Wärme-Kopplungsanlagen oder beliebigen Abwärmequellen, angetrieben werden. Ein weiteres Einsatzgebiet sind Wärmepumpen zur Hausheizung, Brauchwassererwärmung oder in industriellen Anwendungen.

Die erfindungsgemäße Ausführung der Hauptkomponentenwärmetauscher - oder auch des Lösungswärmetauschers, d.h. mit Kälte-/Sorptionsmittelmischung auf der Wärmetauscheraussen- und -innenseite - eröffnet die folgenden Vorteile:

Verringerung der Anzahl der Durchführungen durch die Behälterwände. Dadurch Verringerung der Anzahl potentieller Leckagestellen und damit Verbesserung der Anlagenfunktion, insbesondere Verringerung des Eindringens nicht-kondensierbarer Gase. Gleichzeitig Verringerung des Herstellaufwands und der Herstellkosten; gegebenenfalls können Bauteile oder Teilschritte der Herstellung von Standardwärmetauschern genutzt werden. Durch die erfindungsgemäße Ausführung der Wärmetauscher wird eine schwächere Dimensionierung der Behälterwände möglich, insbesondere kann die Stärke der stirnseitigen Behälterabschlüsse (Rohrplatten), in die dem Stand der Technik entsprechend die horizontalen Wärmetauscherrohre eingewalzt werden, verringert werden. Zudem ergibt sich ein geringere Beanspruchung der Behälterwand in Folge thermischer Dehnung des Wärmetauschermaterials, da der Wärmetauscher nicht fest in der Behälterwand eingespannt wird. Dies erlaubt eine Reduzierung der Materialkosten und des Anlagengewichts.

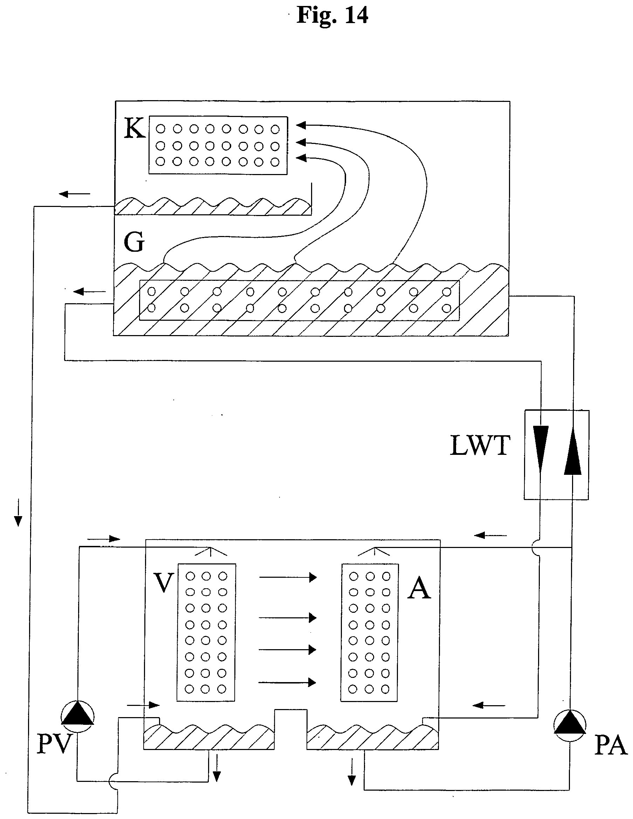

Fig. 14 zeigt eine erste Ausführungsform einer Sorptionswärmepumpe bzw. -kältemaschine mit einem ersten und einem zweiten Behälter/Wärmetauscher gemäß der vorliegenden Erfindung. Der erste Behälter/Wärmetauscher umfaßt einen Wärmetauscher, der als gefluteter Generator oder Austreiber G ausgebildet ist und einen zweiten Wärmetauscher, der als Kondensator K ausgebildet ist. Der zweite Behälter/Wärmetauscher umfaßt einen dritten Wärmetauscher, der als Rieselverdampfer V und einen vierten Wärmetauscher, der als Rieselabsorber A ausgebildet ist. Der Boden des ersten Behälter/Wärmetauschers ist mit Lösung geflutet - Lösungssumpf, wobei der Lösungssumpf den ersten Wärmetauscher, d. h. den Generator G vollständig überdeckt - gefluteter Generator. Über dem Lösungssumpf ist der zweite Wärmetauscher, d. h. der Kondensator K angeordnet. Unmittelbar unter dem Kondensator K ist eine Kondensatauffangwanne für das aus dem Kondensator K abtropfende Kältemittelkondensat vorgesehen.

Der Boden des zweiten Behälter/Wärmetauschers ist in eine Wanne für Kondensat mit darüberliegendem Rieselverdampfer V und eine Wanne für Lösung mit darüberliegenden Rieselabsorber A unterteilt. Aus der Wanne für Lösung wird die Lösung abgezogen und über eine Lösungspumpe zum einen dem Lösungssumpf im ersten Behälter/Wärmetauscher zugeführt und zum anderen über eine Verteilerdüse in den Absorber A bzw. den zweiten Behälter/Wärmetauscher zurückgeführt. Durch diesen Rezirkulationskreis wird für eine dauerhafte Benetzung des Rieselabsorbers A gesorgt. Arme Lösung aus dem Lösungssumpf des ersten Behälter/Wärmetauschers wird der Wanne für Lösung in dem zweiten Behälter/Wärmetauscher zugeführt. Kältemittelkondensat aus der Kondensatauffangwanne wir der Wanne für Kondensat im zweiten Behälter/Wärmetauscher zugeführt. Über eine Kondensatpumpe wird beständig Kondensat aus der Wanne für Kondensat abgeführt und über eine Verteilerdüse über dem Rieselverdampfer verteilt. Zwischen der aus dem Generator G abgezogenen und dem Generator G zugeführten Lösung ist ein Lösungswärmetauscher LWT vorgesehen.

Durch den überfluteten Generator G und die Rezirkulation der Lösung im Rieselabsorber A ist für eine gute Benetzung von Generator und Absorber gesorgt. Durch die Verwendung eines überfluteten Generators G verringert sich der Lösungsmassenstrom und der Betrieb der Sorptionsanlage wird effizienter - verbesserter COP. Der vorgesehene Aufbau mit Pumpe und Rezirkulation ermöglicht den Einsatz von Verteilerdüsen oder andere mit Druck zu beaufschlagende Verteilereinrichtungen im Absorber.

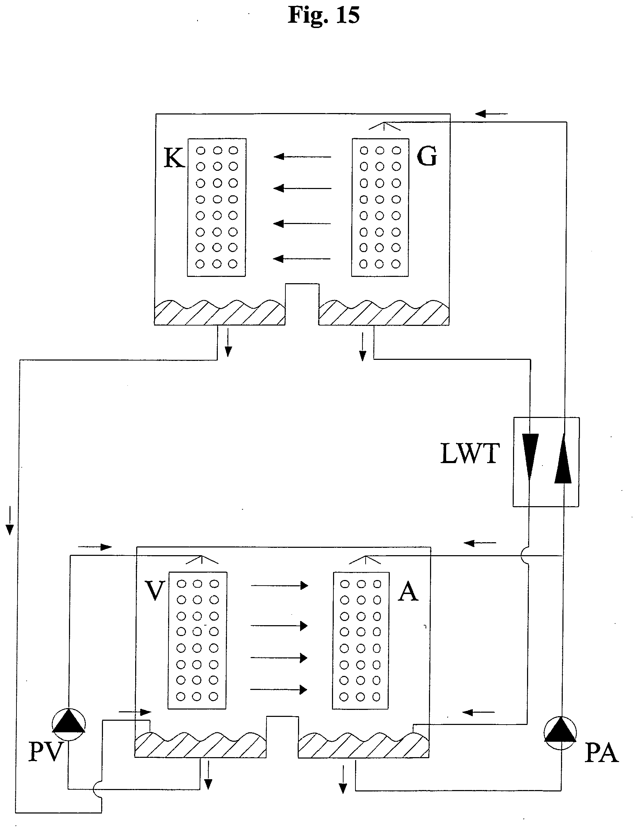

Die zweite Ausführungsform der Soprtionswärmepumpe bzw. kältemaschine nach Fig. 15 unterscheidet sich von der Ausführungsform nach Fig. 14 lediglich hinsichtlich des Aufbaus des ersten Behälter/Wärmetauschers. Kondensator K und Generator G sind nicht übereinander, sondern wie Absorber A und Verdampfer V nebeneinander in einem gemeinsamen Behälter angeordnet. Der Generator G ist als Rieselaustreiber ausgebildet, wobei die Lösung mittels einer Verteilerdüse über dem Rieselaustreiber verteilt wird. Im übrigen entspricht die Ausführungsform nach Fig. 15 der Ausführungsform nach Fig. 14.

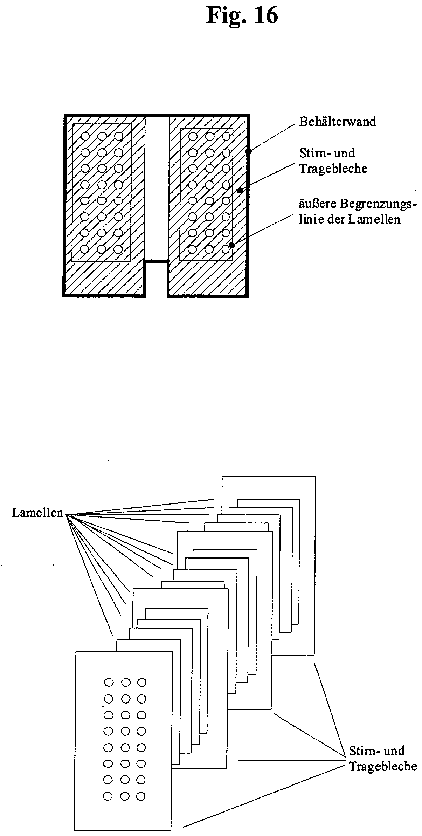

Fig. 16 zeigt schematisch den Aufbau des ersten und zweiten Behälter/Wärmetauschers in Form von Rohrbündeln mit senkrecht zu den Rohrbündeln verlaufenden rechteckförmigen Lamellen. Die Rohrbündel werden durch rechteckförmige Stirnbleche abgeschlossen, die etwas größer sind als die Lamellen. Zwischen den Lamellen sind weitere Tragbleche vorgesehen, die die gleiche Größe wie die Stirnbleche aufweisen. Die Stirn- und Tragbleche stützen die Behälterwandung des umschließenden Behälters ab. Gleichzeitig wird die Wärmeankoppelung des Wärmetauschers mit der Behälterwandung auf einem Minimum gehalten.

## Patentansprüche

1. Behälter mit Wärmetauscher für kompakte Sorptionskälteanlagen oder -wärmepumpen mit flüssigem oder festem Sorptionsmittel und geschlossener Kreislaufführung, mit
einem geschlossenen druck- oder vakuumdichten Behälter mit einer Behälterwandung, in dem der wenigstens eine Wärmetauscher angeordnet ist, der mit außerhalb des Behälter liegenden Wärmequellen und/oder Wärmesenken verbindbar ist,
wobei der wenigstens eine Wärmetauscher eine Mehrzahl von zumindest abschnittsweise geraden Wärmetauscherrohrstücken oder eine Mehrzahl von parallel zueinander angeordneten durchströmbaren Wärmetauscherplattenpaaren umfasst,
wobei die einzelnen Wärmetauscherrohrstücke oder Wärmetauscherplattenpaare direkt oder über innerhalb des Behälters angeordnete Verbindungsrohrstücke miteinander verbunden sind,
wobei die Wärmetauscherrohrstücke oder Wärmetauscherplattenpaare auf der Außenseite mit Kältemittel oder Sorptionsmittel beaufschlagbar sind, und wobei eines der Verbindungsrohrstücke mit einem druck- oder vakuumdicht in den Behälter eingebrachten Wärmetauscherzulauf und eines der Verbindungsrohrstücke mit einem druck- oder vakuumdicht in den Behälter eingebrachten Wärmetauscherrücklauf verbunden ist,
**dadurch gekennzeichnet,**
**dass** sich die Behälterwandung auf dem wenigstens einen Wärmetauscher abstützt.

2. Behälter nach Anspruch 1, **dadurch gekennzeichnet, dass** sich die Behälterwandung punktuell auf dem wenigstens einen Wärmetauscher abstützt.

3. Behälter nach Anspruch 1 oder 2, **dadurch gekennzeichnet, dass** die Verbindungsrohrstücke vorgefertigte Formstücke sind.

4. Behälter nach einem der vorhergehenden Ansprüche, **dadurch gekennzeichnet, dass** der wenigstens eine Wärmetauscher aus meandrierenden Rohrzügen oder Haarnadelrohren zusammengesetzt ist, die durch Biegen gerader Rohre herstellbar sind.

5. Behälter nach einem der vorhergehenden Ansprüche, **dadurch gekennzeichnet, dass** der wenigstens eine Wärmetauscher aus wenigstens einem Plattenpaar besteht, dass die beiden Platten eines Paares so zusammengefügt werden, dass sie einen Strömungskanal für den externen Wärmeträger bilden und so die Trennung von internem Sorptionskreislauf und Umgebung gewährleisten.

6. Behälter nach einem der vorhergehenden Ansprüche, **dadurch gekennzeichnet, dass** die Wärmetauscherrohrstücke oder die Wärmetauscherplattenpaare strukturiert sind.

7. Behälter nach einem der vorhergehenden Ansprüche, **dadurch gekennzeichnet, dass** die Wärmetauscherrohrstücke oder die Wärmetauscherplattenpaare Lamellen zur Vergrößerung der äußeren Wärmetauscherfläche aufweisen.

8. Behälter nach Anspruch 7, **dadurch gekennzeichnet, dass** die Wärmetauscherplattenpaare oder die Lamellen jeweils eine Mehrzahl durchsetzende Öffnungen aufweisen.

9. Behälter nach einem der vorhergehenden Ansprüche, **dadurch gekennzeichnet, dass** der wenigstens eine Wärmetauscher Stirn- und Tragbleche umfasst, auf denen sich die Behälterwandung punktuell abstützt.

10. Sorptionswärmepumpe bzw. Sorptionskältemaschine mit einem ersten Behälter nach einem der vorhergehenden Ansprüche mit einem ersten Wärmetauscher, der als Generator ausgebildet ist, und einem zweiten Wärmetauscher, der als Kondensator ausgebildet ist,
einem zweiten Behälter nach einem der vorhergehenden Ansprüche mit einem dritten Wärmetauscher, der als Verdampfer ausgebildet ist, und einem vierten Wärmetauscher, der als Absorber ausgebildet ist.

11. Sorptionswärmepumpe bzw. Sorptionskältemaschine nach Anspruch 10, **dadurch gekennzeichnet, dass** der erste Wärmetauscher als überfluteter Generator ausgebildet ist.

12. Sorptionswärmepumpe bzw. Sorptionskältemaschine nach Anspruch 10, **dadurch gekennzeichnet, dass** der erste Wärmetauscher als Rieselaustreiber ausgebildet ist.

13. Sorptionswärmepumpe bzw. Sorptionskältemaschine nach einem der vorhergehenden Ansprüche 10 bis 12, **dadurch gekennzeichnet, dass** der vierte Wärmetauscher als Rieselabsorber ausgebildet ist, und dass der Rieselabsorber durch.einen ersten Rezirkulationskreis dauernd mit Lösung benetzt gehalten wird.

14. Sorptionswärmepumpe bzw. Sorptionskältemaschine nach einem der Ansprüche 10 bis 13, **dadurch gekennzeichnet, dass** der dritte Wärmetauscher als Rieselverdampfer ausgebildet ist, und dass der Rieselverdampfer durch einen zweiten Rezirkulationskreis dauernd mit Kondensat benetzt gehalten wird.

## Claims

1. Container comprising a heat exchanger for compact sorption refrigerating systems or sorption heat pumps having a liquid or solid sorbent and closed-loop circulation, comprising a closed pressure-tight or vacuum-tight container having a container wall, in which container the at least one heat exchanger is arranged, which heat exchanger can be connected to heat sources and/or heat sinks located outside the container, the at least one heat exchanger comprising a plurality of heat-exchanger pipe pieces that are straight at least in portions or a plurality of permeable heat-exchanger plate pairs that are arranged in parallel with one another, the individual heat-exchanger pipe pieces or heat-exchanger plate pairs being interconnected directly or via connecting pipe pieces arranged inside the container, it being possible to expose the outer face of the heat-exchanger pipe pieces or heat-exchanger plate pairs to a refrigerant or sorbent, and one of the connecting pipe pieces being connected to a heat-exchanger inlet that is incorporated in the container in a pressure-tight or vacuum-tight manner and one of the connecting pipe pieces being connected to a heat-exchanger return outlet that is incorporated in the container in a pressure-tight or vacuum-tight manner, **characterised in that** the container wall is supported on the at least one heat exchanger.

2. Container according to claim 1, **characterised in that** the container wall is supported on the at least one heat exchanger in places.

3. Container according to either claim 1 or claim 2, **characterised in that** the connecting pipe pieces are prefabricated shaped pieces.

4. Container according to any one of the preceding claims, **characterised in that** the at least one heat exchanger is composed of meandering lengths of pipe or hairpin pipes that can be produced by bending straight pipes.

5. Container according to any one of the preceding claims, **characterised in that** the at least one heat exchanger consists of at least one plate pair, **in that** the two plates of a pair are fitted together in such a way that they form a flow channel for the external heat transfer medium and thus ensure separation of the internal sorption circuit from the surroundings.

6. Container according to any one of the preceding claims, **characterised in that** the heat-exchanger pipe pieces or the heat-exchanger plate pairs are structured.

7. Container according to any one of the preceding claims, **characterised in that** the heat-exchanger pipe pieces or the heat-exchanger plate pairs comprise lamellae for increasing the outer surface area of the heat exchanger.

8. Container according to claim 7, **characterised in that** the heat-exchanger plate pairs or the lamellae each comprise a plurality of through-holes.

9. Container according to any one of the preceding claims, **characterised in that** the at least one heat exchanger comprises end and support sheets on which the container wall is supported in places.

10. Sorption heat pump or sorption refrigerating machine comprising a first container according to any one of the preceding claims having a first heat exchanger that is designed as a generator and a second heat exchanger that is designed as a condenser, and comprising a second container according to any one of the preceding claims having a third heat exchanger that is designed as an evaporator and a fourth heat exchanger that is designed as an absorber.

11. Sorption heat pump or sorption refrigerating machine according to claim 10, **characterised in that** the first heat exchanger is designed as a flooded generator.

12. Sorption heat pump or sorption refrigerating machine according to claim 10, **characterised in that** the first heat exchanger is designed as a trickle boiler.

13. Sorption heat pump or sorption refrigerating machine according to any one of the preceding claims 10 to 12, **characterised in that** the fourth heat exchanger is designed as a trickle absorber, and **in that** the trickle absorber is permanently wetted with solution by means of a first recirculation circuit.

14. Sorption heat pump or sorption refrigerating machine according to any one of claims 10 to 13, **characterised in that** the third heat exchanger is designed as a trickle evaporator, and **in that** the trickle evaporator is permanently wetted with condensate by means of a second recirculation circuit.

## Revendications

1. Contenant comprenant un échangeur de chaleur pour des installations frigorifiques à sorption ou des pompes à chaleur à sorption compactes comprenant un agent de sorption liquide ou solide et un système de recyclage fermé, comprenant un contenant fermé étanche à la pression ou au vide pourvu d'une paroi de contenant, dans lequel est disposé l'au moins un échangeur de chaleur, qui peut être relié à des sources de chaleur et/ou des dissipateurs thermiques se trouvant à l'extérieur du contenant,
dans lequel l'au moins un échangeur de chaleur comprend une pluralité de pièces tubulaires d'échangeur de chaleur au moins par endroits rectilignes ou une pluralité de paires de plaques d'échangeur de chaleur pouvant être traversées par un flux disposées de manière parallèle les unes par rapport aux autres,
dans lequel les diverses pièces tubulaires ou paires de plaques d'échangeur de chaleur sont reliées les unes aux autres directement ou par l'intermédiaire de pièces tubulaires de liaison disposées à l'intérieur du contenant,
dans lequel les pièces tubulaires d'échangeur de chaleur ou les paires de plaques d'échangeur de chaleur peuvent être soumises à l'action d'un réfrigérant ou d'un agent de sorption sur le côté extérieur, et
dans lequel une des pièces tubulaires de liaison est reliée à un conduit d'arrivée d'échangeur de chaleur introduit dans le contenant de manière étanche à la pression ou au vide et une des pièces tubulaires de liaison est reliée à un conduit de retour d'échangeur de chaleur introduit dans le contenant de manière étanche à la pression ou au vide,
**caractérisé en ce**
**que** la paroi de contenant prend appui sur l'au moins un échangeur de chaleur.

2. Contenant selon la revendication 1, **caractérisé en ce que** la paroi de contenant prend appui de manière ponctuelle sur l'au moins un échangeur de chaleur.

3. Contenant selon la revendication 1 ou 2, **caractérisé en ce que** les pièces tubulaires de liaison sont des pièces moulées préfabriquées.

4. Contenant selon l'une quelconque des revendications précédentes, **caractérisé en ce que** l'au moins un échangeur de chaleur est composé de tubages ou de tubes capillaires sinueux, qui peuvent être fabriqués par cintrage de tubes rectilignes.

5. Contenant selon l'une quelconque des revendications précédentes, **caractérisé en ce que** l'au moins un échangeur de chaleur est constitué d'au moins une paire de plaques, que les deux plaques d'une paire sont assemblées de telle sorte qu'elles forment un canal d'écoulement pour l'agent caloporteur externe garantissant ainsi la séparation entre le circuit à sorption interne et l'extérieur.

6. Contenant selon l'une quelconque des revendications précédentes, **caractérisé en ce que** les pièces tubulaires d'échangeur de chaleur ou les paires de plaques d'échangeur de chaleur sont structurées.

7. Contenant selon l'une quelconque des revendications précédentes, **caractérisé en ce que** les pièces tubulaires d'échangeur de chaleur ou les paires de plaques d'échangeur de chaleur présentent des lamelles servant à agrandir la surface d'échangeur de chaleur extérieure.

8. Contenant selon la revendication 7, **caractérisé en ce que** les paires de plaques d'échangeur de chaleur ou les lamelles présentent respectivement une multitude d'ouvertures traversantes.

9. Contenant selon l'une quelconque des revendications précédentes, **caractérisé en ce que** l'au moins un échangeur de chaleur comprend des tôles frontales et de support, sur lesquelles la paroi de contenant prend appui de manière ponctuelle.

10. Pompe à chaleur à sorption ou machine de réfrigération à sorption comprenant un premier contenant selon l'une quelconque des revendications précédentes comprenant un premier échangeur de chaleur, qui est réalisé sous la forme d'un générateur, et un deuxième échangeur de chaleur, qui est réalisé sous la forme d'un condensateur,
comprenant un deuxième contenant selon l'une quelconque des revendications précédentes comprenant un troisième échangeur de chaleur, qui est réalisé sous la forme d'un évaporateur, et
comprenant un quatrième échangeur de chaleur, qui est réalisé sous la forme d'un absorbeur.

11. Pompe à chaleur à sorption ou machine de réfrigération à sorption selon la revendication 10, **caractérisée en ce que** le premier échangeur de chaleur est réalisé sous la forme d'un générateur submergé.

12. Pompe à chaleur à sorption ou machine de réfrigération à sorption selon la revendication 10, **caractérisée en ce que** le premier échangeur de chaleur est réalisé sous la forme d'un extracteur d'écoulement.

13. Pompe à chaleur à sorption ou machine de réfrigération à sorption selon l'une quelconque des revendications 10 à 12, **caractérisée en ce que** le quatrième échangeur de chaleur est réalisé sous la forme d'un extracteur d'écoulement, et que l'absorbeur d'écoulement est maintenu mouillé avec une solution de manière prolongée par un premier circuit de recirculation.

14. Pompe à chaleur à sorption ou machine de réfrigération à sorption selon l'une quelconque des revendications 10 à 13, **caractérisée en ce que** le troisième échangeur de chaleur est réalisé sous la forme d'un évaporateur d'écoulement, et que l'évaporateur d'écoulement est maintenu mouillé avec un condensat de manière prolongée par un deuxième circuit de recirculation.
